# EUROPEAN PATENT SPECIFICATION

(11) **EP 1 154 592 B1**
(45) Date of publication and mention of the grant of the patent: **29.08.2007**
(21) Application number: 00850080.3
(22) Date of filing: 10.05.2000
(51) Int. Cl.: H04J 14/02, H04L 12/437

(54) **Channel protection**
Kanalschutz
Protection de voie

(43) Date of publication of application: 14.11.2001
(73) Proprietor: TELEFONAKTIEBOLAGET LM ERICSSON (publ), 164 83 Stockholm (SE)
(72) Inventor: Persson, Lars, 117 68 Stockholm (SE)
(74) Representative: Sjöberg, Mats Hakan

(56) References cited:
- WO-A-99/03230
- US-A- 5 657 321
- US-A- 5 680 235
- US-A- 6 052 210

## Description

### TECHNICAL FIELD OF THE INVENTION

The present invention relates to a method and an arrangement to protect a communication channel in a ring structured transport network.

### DESCRIPTION OF RELATED ART

In for example broadband multimedia telecommunications, there is a need for multi-channel systems. A ring-structured architecture is common for communication networks. In a transport network of ring structure it is useful to include an embedded service telephone channel, which can be accessed at every node connected to the ring, using a common telephone. It is important that the service telephone channel has a high availability, as it is used during installation and when having trouble-shooting problems with the ring structured network. US-A-5 657 321 discloses a looped bus system that includes several nodes connected by unidirectional buses having opposite directions of signal transmission. Buses can be reconfigured and nodes can be added freely since a head of bus function for each bus is located at the same node as the termination of bus function for another bus. WO 99/03230 discloses a self-healing ring structured network wherein a fault flag is provided for the indication of a fault. US-A-5 680 235 discloses a communication network arranged in a ring structure wherein each node has at least one on/off node switch used to avoid problems caused by a break. US-A-6 052 210 discloses a network wherein data traffic is transmitted between a plurality of ring nodes via optical links. When a failure is detected in a first ring link a cross connect switch couples a first ring node to an alternate path. It is essential to protect a telephone channel from breaks in the ordinary transport path. In the international application WO 99/03230 is disclosed a self-healing ring network and a method for fault handling in said network. The international application discloses a ring-structured network comprising bi-directional optical WDM channels (WDM: Wavelength Division Multiplexing). An inactive segment between nodes in the network prevents nodes in the ring from receiving traffic from more than one direction at the same time. In case of a fault, the inactive segment is moved to the location where the fault is. The previous inactive segment is thereafter active and relays traffic information. In the international application WO 96/32787 another flexible bi-directional bus architecture is shown, arranged in a ring structure. The problem with the solution in the two international applications is that the pre-defined network structure will be disturbed when the inactive segment is moved after an error. Even after repair of the fault causing the error, the new location of the inactive segment is maintained. The change of the location of the inactive segment causes inconvenience and disturbances for operators handling the system. A situation where this in particular is obvious is when two simultaneous errors suddenly are the cause of two inactive segments.

### SUMMARY OF THE INVENTION

The present invention solves the problem with a self-healing ring structured transport network having a ring breaker whose location has changed from a pre-defined location, after an error. The change of the location of the ring breaker causes inconvenience and disturbances for operators handling the system.

This problem is solved by the invention by affecting a pre-defined default site to always act as ring breaker once again after mending of an error that once caused the ring breaker location to change.

Another problem that is solved by the invention is the problem with echoes and circulating feedback during state transitions in the network, i.e. during a change of ring breaker location from one node to another. Echoes and circulation feedback arises due to sudden non-existence of ring breakers.

This problem is solved by the invention by internal communication between sites, making sure that one site always is acting as ring breaker.

The object of the present invention is to keep a defined default node as ring breaker also after an error. Another object of the invention is to accomplish a transition period without circulating feedback.

More in detail the problems are solved by a method to protect a communication channel in a transport network. The network comprises network nodes or sites arranged via bi-directional links in a ring structure. One of the nodes, a so called default node, is acting as ring breaker by preventing relaying of information in at least one of the two directions. An error is located in a link connected to one of the nodes. The node is intended to receive information via the link - but fails, due to the error. This node is called an override node. The override node is affected to act as ring breaker by preventing relaying of information in the above said at least one direction. The default node is affected to permit relaying of information in said at least one direction. The fault causing the error is repaired and the error ceases to exist. The default node is affected to act as ring breaker again by preventing relaying of information. After the default node has been set to ring breaker, the override node is affected to permit relaying of information.

An arrangement according to the invention comprises means to activate and deactivate ring breakers in the system. The arrangement also comprises means for detection of errors that occur and when errors cease to exist. The arrangement also comprises means to guarantee that one ring breaker always is active in the ring structured network.

An advantage with the present invention is that the pre-defined location of a ring breaker can be kept also after the fault in the network that caused the location of ring breaker to temporarily change, has been mended.

Another advantage is the possible suppression of circulating feedback during state transition periods.

Yet another advantage with the invention the easy way to protect a sensitive communication channel, such as a service telephone channel.

Yet another advantage is the minimum of signaling that is necessary to perform, to achieve the objects. The signaling is causing only a short not audible interruption.

The invention will now be described more in detail with reference to exemplifying embodiments thereof and also with reference to accompanying drawings.

### DESCRIPTION OF THE DRAWINGS

Figure 1 shows a schematic overview of an optical ring network in a first embodiment of the invention, showing a default ring breaker and an override ring breaker.
Figure 2 shows a node, acting as ring breaker in the ring network.
Figure 3 is a flow chart disclosing the most important steps of the method according to the invention.
Figure 4 discloses a second embodiment according to the invention, showing a default ring breaker, two faults causing errors and an override ring breaker, all in a non-optical network.
Figure 5 is a block schematic illustration of an arrangement according to the invention.

### DESCRIPTION OF PREFERRED EMBODIMENTS

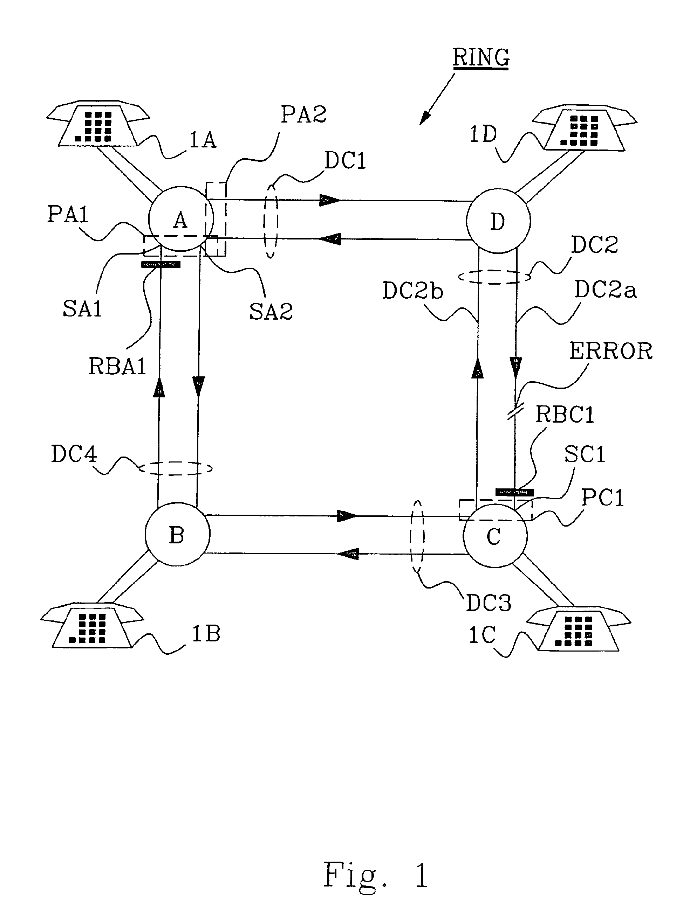

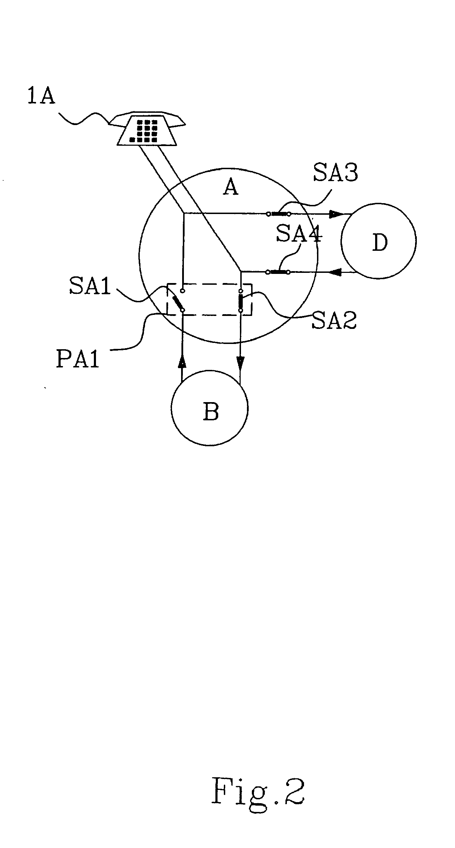

In figure 1 is disclosed an optical ring network using Wavelength Division Multiplexing - WDM. The optical WDM network is disclosed in a first embodiment, describing the invention after a single error has occurred in the network. Later in the description, a non-optical network will be disclosed in a second embodiment, describing the invention after two errors have occurred almost at the same time. Wavelength Division Multiplexing WDM involves a combination of a set of traffic-bearing optical signals onto a single fiber pair. It is evident that these signals must not interact with each other during transmission and that they must be capable of being separated for reception at the far end. This is achieved by operating each optical signal on a separate wavelength. Many of the channels are so called payload channels and one of the channels is a so-called overhead channel. A part of the overhead channel is used for service, a so-called service channel within the overhead channel. The WDM transport network shown in figure 1 comprises four nodes, called an A-node, a B-node, a C-node and a D-node. The nodes A, B, C and D are connected to each other via bi-directional links DC1, DC2, DC3 and DC4. The link DC2 for example brings the D-node and the C-node together. A first link part DC2a in the schematic figure, transports information in a direction from the D-node to the C-node. A second link part DC2b of the link DC2 transports information in an opposite direction from the C-node to the D-node. The direction on which information is transported is shown with arrow-symbols on the links in figure 1. Subscriber units 1a, 1b, 1c and 1d are each one connected to one of the nodes A, B, C and D. A service telephone channel is embedded in the transport network. The service channel can be accessed at every node A, B, C and D via the subscriber units 1a, 1b, 1c and 1d. It is important that the service telephone channel has a high availability, as it is used during installation and when during trouble shooting of problems with the ring structured network. Therefore it is very useful to protect the telephone channels from breaks in the ordinary transport path. Each node comprises two bi-directional ports used to build up the ring-structured network. The A-node, for example, comprises two bi-directional ports PA1 and PA2. The A-node is connected to the B-node by the link DC4, via the bi-directional port PA1. The A-node is also connected to the D-node by the link DC1, via the bi-directional port PA2. Each one of the nodes A-D is connected to two other nodes A-D via two ports. All nodes A-D are together forming the ring-structured network RING. One of the nodes, the A-node, is in this embodiment acting as ring breaker in one direction. For the node to act as ring breaker in a direction, relaying of information is prevented in that direction. In this embodiment, a node only acts as ring breaker in one direction. It is however to be noted that often the node acts as ring breaker in both directions in the ring structure. This will be further discussed in the already mentioned second embodiment where a ring breaker is acting in two directions. In figure 1, the fact that the A-node is acting as ring breaker is shown by a ring breaker symbol RBA1 between the A-node and the B-node. The ring breaker RBA1 prevents transportation of information between the B-node and the A-node, in direction B to A. A ring breaker prevents acoustic feedback in the ring. Another ring breaker RBC1 located at the C-node is also shown in figure 1. The port PA1 comprises switches SA1 and SA2. The location of a switch SC1 belonging to the port PC1 is also shown in the figure and will be explained later. The port PA1 will be further discussed together with figure 2a. In a prior art example, the ring breaker RBA1 is activated and prevents information to be relayed from the B-node to the A-node. Information is sent, clockwise in the figure, from the A-node to the B-node. This information can for example be a carrier wave without any other relevant information. Due to an error ERROR, affecting the link DC2a between the D-node and the C-node, the transportation of information is interrupted and the C-node will not receive the sent information. The ring network is at this point interrupted in two places, at the A-node and at the link DC2a between the D-node and the C-node. A new ring breaker RBC1 will be activated between the D-node and the C-node. The new ring breaker RBC1 is located at the C-node and the previous ring breaker RBA1 is removed and information can again be relayed from the B-node to the A-node. When the fault causing the error is repaired, according to prior art the new ring breaker is maintained at the C-node. The function of the ring breakers RBA1 and RBC1 will be further explained later in the description together with a method according to the invention.

In figure 2 can be seen an example of a ring breaker. It is to be noted that the ring breaker in figure 2 is preventing information to be relayed in one direction only. As already mentioned however, the ring breakers often work in two directions instead of in only one. The switch symbols in the schematic figure 2 is convenient to use when explaining the figures. It is however to be noted that a switch only is a symbol saying that information is relayed or not relayed in a direction. This does not necessarily has to be performed by using a switch, more likely a de-activation of a switch is realized by sending non-relevant information in that direction. In figure 2 is shown the node A from figure 1. The node comprises two bi-directional ports of the type mentioned above. The node A is connected to the node B and to the node D. The subscriber set 1A is connected to the node A. The node A is connected to the node B via a first port comprising the two switches SA1 and SA2. The node A is connected to the node D via a second port comprising two switches SA3 and SA4. When the node breaker in node A is set to prevent relaying of information from node B to node A, the switch SA1 is deactivated. The switch SA2 is deactivated when the node breaker is set to prevent transportation of information from node A to node B. When the node breaker in node A is set to prevent relaying of information from node D to node A, the switch SA4 is deactivated. When the node breaker is set to prevent transportation of information from node A to node D, the switch SA3 is deactivated. Of course, if a node is set to prevent information in two directions, two switches have to be de-activated at the same time.

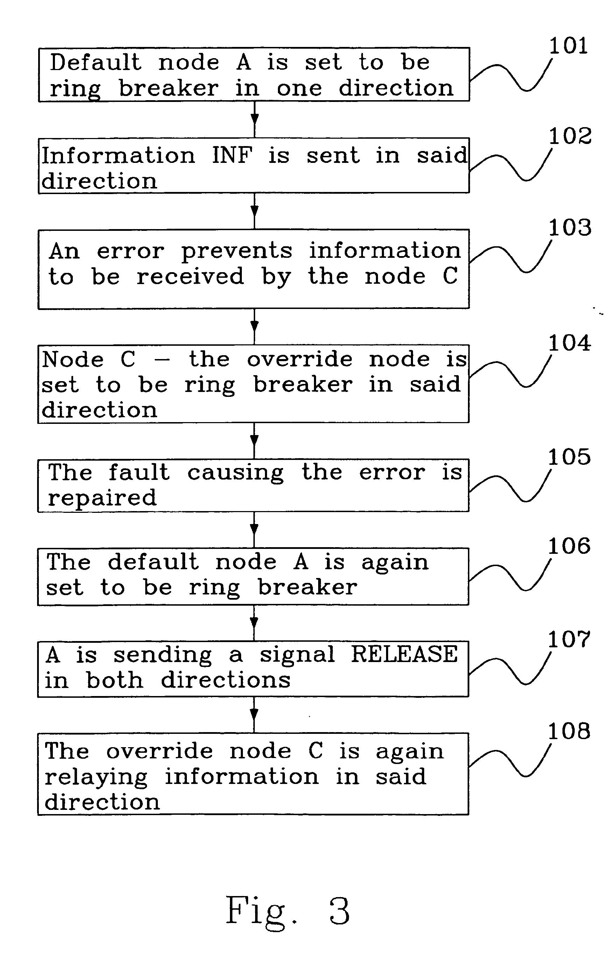

A method according to the invention will now be analyzed and described. The object of the invention is to keep a pre-defined node as ring breaker also after a fault that has occurred, has been amended. The most essential steps in the method will be disclosed later in a flow chart in figure 3. The method is to be studied together with the already explained figures 1 and 2. The node A is at the beginning set to be the node breaker in one direction. This can be seen with the node breaker symbol RBA1 in figure 1. The switch SA1 is deactivated as can be seen in figure 2 and information is thereby prevented from being relayed from node B to node A. The node A is acting as the so-called default node A. The method comprises the following further steps:
- The default node A is sending an idle signal IDLE in both directions, telling the system that it is the default node. As already said, a schematic switch like SA1 can be realized by the sending of not valid information.
- Information INF is sent in both clockwise and anti-clockwise direction in the traffic channel. The information in the clockwise direction has to pass nodes in the following sequence order: node-A, node-D, node-C and node-B.
- Node D is prepared to receive, and receives the sent information via the link DC1.
- Node C is prepared to receive, but does not receive, the information via the DC2.
- Node C is noted as the first node among the nodes D, C and B not receiving the sent information. This is due to an error which consequently has to be located between node D and node C.
- Node C is pointed out to be a so-called override node. The override node C was intended to receive information - but failed.
- The switch SC1 is deactivated and the override node C acts as ring breaker by preventing the node from relaying information in the above said clockwise direction i.e. from the link DC2a.
- The override node C is sending an override signal OVERRIDE in both directions, telling the system that it is the override node.
- The default node A is affected to permit relaying of information in said direction i.e. from node B to node A. The switch SA1 is activated, i.e. the node A is no longer the ring breaker.
- The fault causing the error between node D and node C is taken care of and the previous error between the nodes D and C ceases to exist.
- The override node C is sending a revert signal REVERT in both directions, telling the system that the fault has been amended.
- The default node A is affected to again act as ring breaker by preventing the site from relaying information in said clockwise direction from node B to node A.
- The default node A is sending a release signal RELEASE in both directions, telling the system that it acts as ring breaker.
- The override node C is affected to permit relaying of information in said direction from node D to node C.
- The override node C is sending an idle signal IDLE in both directions, telling the system that it is in default state.
- The default node A is sending an idle signal IDLE in both directions, telling the system that it is in default state.

To summarize, in the above described method, the override node C was affected after an error, to act as ring breaker. The ring breaker was thereby positioned at a location close to the error. Since no information can be transferred between D and C in direction D to C as long as the error exists, the error will automatically act as ring breaker. After the fault causing the error has been repaired, the default ring breaker A will again act as ring breaker. A release signal RELEASE sent from node-A guarantees that the ring breaker in the override node never is open at the same time as the ring breaker in the default node. This is done by waiting for the release signal before the override node again permits relaying of information.

The most essential steps of the method are disclosed with a flow chart in figure 3. The flow chart is meant to be read together with figure 1 and 2. The most essential steps are the following:
- The default node A is set to be ring breaker. A block 101, in figure 3 illustrates this step.
- Information INF is sent in the same direction as the default node A acts as ring breaker, i.e. in clockwise direction. A block 102 illustrates the step.
- An error prevents the information from reaching node C. A block 103 illustrates the step.
- The override node C is set to be the new ring breaker. A block 104 illustrates the step.
- The fault causing the error is taken care of and the error ceases to exist. A block 105 illustrates the step.
- The default node A is affected to act as ring breaker again. A block 106 illustrates the step.
- The default node A is sending a release signal RELEASE in both directions, telling the system that it acts as ring breaker.
- The override node C is affected to again permit relaying of information. A block 108 illustrates the step.

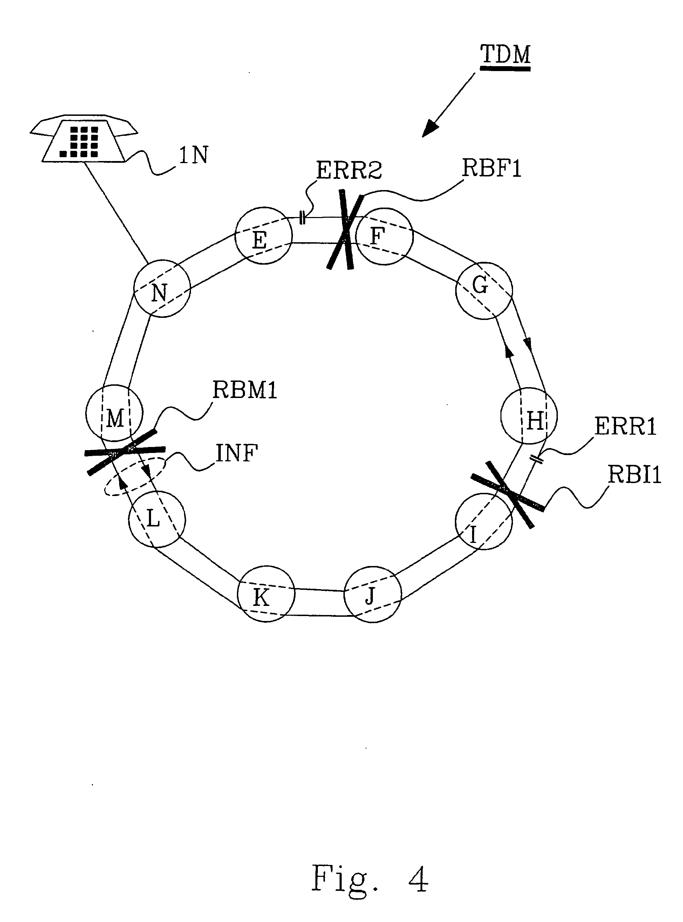

The already mentioned second embodiment is shown in figure 4. A ring structured network TDM in the figure is of a non-optical network type. The network is a Time Division Multiplexing network i.e. frames are transported between sites/nodes in the ring structured network. Information that is to be transmitted is divided into time frames and put into a main frame before transportation. Main frames are sent via bi-directional links in both directions in the ring structured network. This is shown by arrow symbols in two directions. A number of sites E to N are shown in figure 4. In this embodiment, unlike in the earlier embodiment where a ring breaker was set in only one direction, all ring breakers work in two directions i.e. prevent information to be relayed in two directions. A subscriber set 1N of the same type as disclosed earlier in figure 1, is also shown in figure 4. A method according to the invention will now be discussed. In this embodiment, two errors ERR1 and ERR2, a so called primary error ERR1 and a secondary error ERR2, will arise almost at the same time. The site M is acting as ring breaker in both directions and is consequently the default ring breaker M. The method comprises the following steps:
- The default site M is sending an idle signal IDLE in both directions, telling the system that it is the default site.
- Information INF is sent in the traffic channel in both clockwise and anti-clockwise direction. The information in the clockwise direction has to pass sites in the following oreder M, N, E, F, G, H, I, J, K, L. The information in the anti-clockwise direction has to pass the sites in reversed order i.e. from site L to site M.
- Site F is prepared to receive, and receives also, the sent information via a link between sites E and F that is forwarding information in clockwise direction.
- Site I is prepared to receive, but does not receive, the information via a link that is forwarding information in clockwise direction, between sites H and I.
- Site I is noted to be the first node between M and I, not receiving the sent information. This is due to the primary error ERR1 which consequently has to be located between site H and site I.
- Site I is pointed out to be the so called override site I.
- The override site I acts as ring breaker by preventing information to be relayed in both directions.
- The override site I is sending an override signal OVERRIDE in both directions, telling the system that it is the override site.
- The default site M is affected to permit relaying of information in both directions.
- The secondary error ERR2 occurs in the clockwise direction link between site E and site F.
- Site F is prepared to receive, but does now not receive, information via a link that is forwarding information in the clockwise direction between sites E and F.
- Site F is noted as the first site between M and F, not receiving the sent information due to the secondary error ERR2 which consequently has to be located between site E and site F.
- Site F is pointed out to be the so called second override site F.
- The override site F is affected to act as ring breaker by preventing the site from relaying information in both directions.
- The override site F is sending an override signal OVERRIDE in both directions, telling the system that it is the second override site.
- The fault causing the error between site E and site F is repaired.
- The second override site F is sending a revert signal REVERT in both directions, telling the system that the fault has been amended.
- The fault causing the error between site H and site I is repaired.
- The override site I is sending a revert signal REVERT in both directions, telling the system that the fault has been amended.
- The default site M is affected to again act as ring breaker.
- The default site M is sending a release signal RELEASE in both directions, telling the system that it acts as ring breaker.
- The override site I is affected to permit relaying of information in said direction from site H to site I.
- The override site I is sending an idle signal IDLE in both directions, telling the system that it is in default state.
- The override site F is affected to permit relaying of information in said direction from site H to site I.
- The override site F is sending an idle signal IDLE in both directions, telling the system that it is in default state.
- The default node M is sending an idle signal IDLE in both directions, telling the system that it is in default state.

To summarize, the override site I was affected after an error ERR1, to act as ring breaker and the ring breaker M was released. Thereafter, before ERR1 was mended, a second error ERR2 occurred and affected site F to also act as ring breaker. After the fault causing the errors ERR1 and ERR2 was repaired, the default ring breaker M again will act as ring breaker. Without the return of the ring breaker to the default position - i.e. site M, as shown above, as soon as the errors are mended, would have lead to more than one ring breaker at the same time. This would have caused a situation difficult to handle for operators. It is to be observed that the described embodiment just is an example. Another possible situation, solved by the invention is when more than two errors happen.

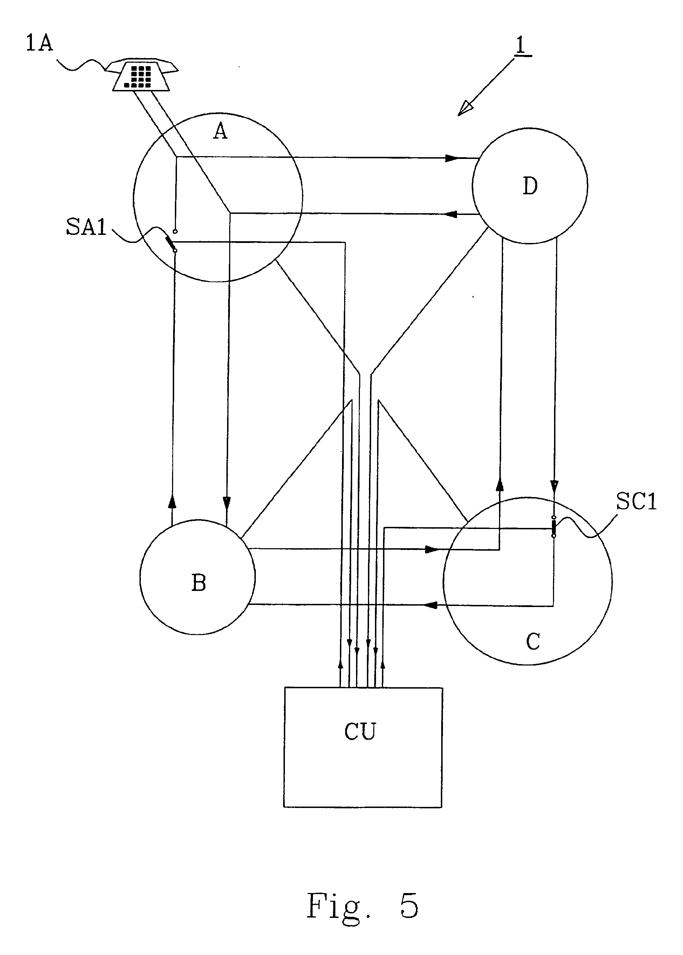

In figure 5 a channel protection arrangement 1 according to the invention is shown. The arrangement in this exemplified embodiment comprises the same four nodes A, B, C and D that earlier was explained in the description in the first embodiment. The subscriber unit 1A is connected to the A-node. The arrangement 1 also comprises a control unit CU. It is to be noted however that this is just an example. The control unit CU function can instead be a built in part in each one of the nodes A, B, C, D. Each one of the nodes A, B, C and D comprises switches of the type shown earlier in figure 2a. For the sake of clarity of the figure, only two of the switches are disclosed in figure 5. The switch SA1 in node A and the switch SC1 in node C are shown in figure 5. Each one of the nodes A, B, C and D are connected to the control unit CU. The control unit can thereby receive status signals from each node. The status signals forward information to the unit CU. By means of the information signals, the control unit is informed of when a node has transmitted information to another node, i.e. which one of the nodes is the target and the destination node. By means of the information signals, the control unit is also informed of when one of the nodes, that the information has to pass, has received the information correctly. If a node is intended to receive but does not receive the information correctly, the control unit gets information about this via the status signals. The control unit controls each one of the switches. Each switch can thereby be set in a deactivated or activated position by the control unit. A deactivated state is a state when an information signal is not passed on. An activated state is the state when the switch is in position to pass on an information signal. In figure 5, the switch SA1 is set in its deactivated state while the switch SC1 is set in its activated state. The control unit CU waits for signals indicating that one ring breaker is deactivated before it activates another ring breaker.

Different variations are possible within the scope of the invention. For example, the order between the steps according to the invention can vary. The control unit CU can be divided and integrated within the sites. The number of nodes/sites and links are of course also variable. The invention is thus not restricted to the above described and illustrated exemplifying embodiments, and modifications can be made within the scope of the claims.

## Claims

1. Method to protect a communication channel in a transport network (RING; TDM), which network comprises network sites (A,B,C,D; E_N) arranged via bi-directional links in a ring structure, whereby one of the sites, a default site (A; M), is acting as ring breaker by preventing relaying of information in at least one direction, which method comprises the following steps:
- emergence of an error (ERROR; ERR1) in the ring structured network (RING; TDM);
- locating an override site (C; I) first prevented to receive information (INF) transported in the network, due to the error;
- influencing the override site (C; I) to act as ring breaker, by preventing the site (C; I) from relaying information in the at least one direction;
- influencing the default site (A; M) to permit relaying of information in the at least one direction.
- mending of the error (ERROR; ERR1), whereby the method is ***characterised by:***
- influencing the default site (A; M) to act as ring breaker by preventing the site from relaying information in said at least one direction.

2. Method to protect a communication channel in accordance with claim 1, which method comprises the following further step:
- affecting the override site (C) to permit relaying of information in said at least one direction.

3. Method to protect a communication channel in accordance with claim 2, whereby the affecting of the override site (C) to permit relaying is preceded by the following step:
- sending a release signal (RELEASE) from the default site (A) to the override site (C).

4. Method to protect a communication channel in accordance with any of the claims 1 to 3, whereby the communication channel in the transport network (RING) is an embedded service telephone channel.

5. Method to protect a communication channel in accordance with any of the claims 1 to 4, which method comprises following further steps:
- Sending an idle signal IDLE from the default node A, telling the system that it is the default node;
- Sending an override signal OVERRIDE from the override node C, telling the system that it is the override node;
- Sending a revert signal REVERT, telling the system that the error was mended;
- Sending an idle signal IDLE by the override node (C) telling the system that it is in a default state;
- Sending an idle signal IDLE by the default node (A) telling the system that it is in a default state.

6. Method in accordance with any of claims 1 to 5, whereby the transport network is a wavelength division multiplexing network.

7. Method in accordance with any of claims 1 to 5, whereby the transport network is a time division multiplexing access network.

8. Method to protect a communication channel in a transport network (TDM) according to claim 1, which method comprises the following further steps:
- Before mending the error (ERR1), emergence of a secondary error (ERR2) in the ring structured network (TDM);
- locating a site (F), first prevented to receive information transported in the network, due to the secondary error (ERR2), the so called second override site (F);
- influencing the second override site (F) to act as second ring breaker, by preventing the site (F) from relaying information in the at least one direction;
- after mending the error (ERR1), affecting the first override site (I) to permit relaying of information.
- mending of the secondary error (ERR2).

9. Method to protect a communication channel in accordance with claim 8, which method comprises the following further step:
- affecting the override site (F) to permit relaying of information.

10. Method to protect a communication channel in accordance with claim 9, whereby the affecting of the override site (F) to permit relaying is preceded by the following step:
- sending of a release signal (RELEASE) from the default site (M) to the override site (F).

11. Method in accordance with any of claims 8 to 10, whereby the transport network is a wavelength division multiplexing network.

12. Method in accordance with any of claims 8 to 10, whereby the transport network is a time division multiplexing access network.

13. Arrangement to protect a communication channel in a transport network (RING), which network comprises network sites (A,B,C,D) arranged via bi-directional links in a ring structure, whereby one of the sites, a default site (A), is acting as ring breaker by preventing relaying of information in at least one direction, comprising :
- means for locating a site, an override site (C), first prevented to receive information (INF) in said one direction due to an error;
- means for affecting the override site (C) to act as ring breaker, by preventing the site (C) from relaying information in the at least one direction;
- means for affecting the default site (A) to permit relaying of information in the at least one direction.
- means for registration of ceasing of an error;
and **characterised by**;
- means for affecting the default site (A) to act as ring breaker by preventing the site from relaying information in said at least one direction.

14. Arrangement to protect a communication channel in accordance with claim 13, comprising means for sending a release signal (RELEASE) from the default site (A) to the override site (C) and means for affecting the override site (C) to permit relaying of information in said at least one direction.

15. Arrangement in accordance with any of claims 13 to 14, whereby the transport network is a wavelength division multiplexing network.

16. Arrangement in accordance with any of claims 13 to 14, whereby the transport network is a time division multiplexing access network.

## Patentansprüche

1. Verfahren zum Schützen eines Kommunikationskanals in einem Transportnetz (RING; TDM), wobei das Netz Netzplätze (A,B,C,D; E_N) umfasst, die über bidirektionale Verbindungen in einer Ringstruktur angeordnet sind, wobei einer der Plätze, ein Vorbesetzungsplatz (A; M), als ein Ringunterbrecher wirkt, indem verhindert wird, dass eine Information in zumindest einer Richtung weitergeleitet wird, wobei das Verfahren die folgenden Schritte umfasst:
- Auftreten eines Störfalls (STÖRFALL; ERR1) in dem ringstrukturierten Netz (RING; TDM);
- Lokalisieren eines Freilaufplatzes (C; I), der aufgrund des Störfalls zuerst daran gehindert wird, eine Information (INF), die in dem Netz transportiert wird, zu empfangen;
- Beeinflussen des Freilaufplatzes (C; I), als ein Ringunterbrecher zu wirken, indem verhindert wird, dass der Platz (C; I) eine Information in der zumindest einen Richtung weiterleitet;
- Beeinflussen des Vorbesetzungsplatzes (A; M), ein Weiterleiten einer Information in der zumindest einen Richtung zuzulassen;
- Beheben des Störfalls (STÖRFALL; ERR1), wobei das Verfahren **gekennzeichnet ist durch**:
- Beeinflussen des Vorbesetzungsplatzes (A; M), als ein Ringunterbrecher zu wirken, indem verhindert wird, dass der Platz eine Information in der zumindest einen Richtung weiterleitet.

2. Verfahren zum Schützen eines Kommunikationskanals nach Anspruch 1, wobei das Verfahren den folgenden weiteren Schritt umfasst:
- Bewirken, dass der Freilaufplatz (C) ein Weiterleiten einer Information in der zumindest einen Richtung zulässt.

3. Verfahren zum Schützen eines Kommunikationskanals nach Anspruch 2, wobei dem Bewirken, dass zugelassen wird, dass der Freilaufplatz (C) weiterleitet, der folgende Schritt vorausgeht:
- Senden eines Freigabesignals (FREIGABE) von dem Vorbesetzungsplatz (A) zu dem Freilaufplatz (C).

4. Verfahren zum Schützen eines Kommunikationskanals nach einem der Ansprüche 1 bis 3, wobei der Kommunikationskanal in dem Transportnetz (RING) ein eingebetteter Dienst-Telefonkanal ist.

5. Verfahren zum Schützen eines Kommunikationskanals nach einem der Ansprüche 1 bis 4, wobei das Verfahren die folgenden weiteren Schritte umfasst:
- Senden eines Besetzt-Signals BESETZT von dem Vorbesetzungsknoten A, was dem System anzeigt, dass er der Vorbesetzungsknoten ist;
- Senden eines Freilaufsignals FREILAUF von dem Freilaufknoten C, was dem System anzeigt, dass er der Freilaufknoten ist;
- Senden eines Rückkehrsignals RÜCKKEHR, was dem System anzeigt, dass der Störfall behoben wurde;
- Senden eines Besetzt-Signals BESETZT durch den Freilaufknoten (C), was dem System anzeigt, dass er in einem Vorbesetzungszustand ist;
- Senden eines Besetzt-Signals BESETZT durch den Vorbesetzungsknoten (A), was dem System anzeigt, dass er in einem Vorbesetzungszustand ist.

6. Verfahren nach einem der Ansprüche 1 bis 5, wobei das Transportnetz ein Wellenlängenteilungs-Multiplexiernetz ist.

7. Verfahren nach einem der Ansprüche 1 bis 5, wobei das Transportnetz ein Zeitteilungs-Multiplexier-Zugriffsnetz ist.

8. Verfahren zum Schützen eines Kommunikationskanals in einem Transportnetz (TDM) nach Anspruch 1, wobei das Verfahren die folgenden weiteren Schritte umfasst:
- vor einem Beheben des Störfalls (ERR1), Auftreten eines zweiten Störfalls (ERR2) in dem ringstrukturierten Netz (TDM);
- lokalisieren eines Platzes (F), des so genannten zweiten Freilaufplatzes (F), der aufgrund des sekundären Fehlers (ERR2) zuerst daran gehindert wird, eine Information zu empfangen, die in dem Netz transportiert wird,;
- Beeinflussen des zweiten Freilaufplatzes (F), als ein zweiter Ringunterbrecher zu wirken, indem verhindert wird, dass der Platz (F) eine Information in der zumindest einen Richtung weiterleitet;
- nach einem Beheben des Störfalls (ERR1), Bewirken, dass zugelassen wird, dass der erste Freilaufplatz (I) eine Information weiterleitet;
- Beheben des zweiten Störfalls (ERR2).

9. Verfahren zum Schützen eines Kommunikationskanals nach Anspruch 8, wobei das Verfahren den folgenden weiteren Schritt umfasst:
- Bewirken, dass zugelassen wird, dass der Freilaufplatz (F) eine Information weiterleitet.

10. Verfahren zum Schützen eines Kommunikationskanals nach Anspruch 9, wobei dem Bewirken, dass zugelassen wird, dass der Freilaufplatz (F) weiterleitet, der folgende Schritt vorausgeht:
- Senden eines Freigabesignals (FREIGABE) von dem Vorbesetzungsplatz (M) zu dem Freilaufplatz (F).

11. Verfahren nach einem der Ansprüche 8 bis 10, wobei das Transportnetz ein Wellenlängenteilungs-Multiplexiernetz ist.

12. Verfahren nach einem der Ansprüche 8 bis 10, wobei das Transportnetz ein Zeitteilungs-Multiplexier-Zugriffsnetz ist.

13. Anordnung zum Schützen eines Kommunikationskanals in einem Transportnetz (RING), wobei das Netz Netzplätze (A,B,C,D) umfasst, die über bidirektionale Verbindungen in einer Ringstruktur angeordnet sind, wobei einer der Plätze, ein Vorbesetzungsplatz (A), als ein Ringunterbrecher wirkt, indem verhindert wird, dass eine Information in zumindest einer Richtung weitergeleitet wird, umfassend:
- eine Einrichtung zum Lokalisieren eines Platzes, eines Freilaufplatzes (C), der aufgrund eines Störfalls zuerst daran gehindert wird, eine Information (INF) in der einen Richtung zu empfangen;
- eine Einrichtung zum Bewirken, dass der Freilaufplatz (C) als ein Ringunterbrecher wirkt, indem verhindert wird, dass der Platz (C) eine Information in der zumindest einen Richtung weiterleitet;
- eine Einrichtung zum Bewirken, dass zugelassen wird, dass der Vorbesetzungsplatz (A) eine Information in der zumindest einen Richtung weiterleitet;
- eine Einrichtung zum Registrieren eines Beendens eines Störfalls;
und **gekennzeichnet durch**:
- eine Einrichtung zum Bewirken, dass der Vorbesetzungsplatz (A) als ein Ringunterbrecher wirkt, indem verhindert wird, dass der Platz eine Information in der zumindest einen Richtung weiterleitet.

14. Anordnung zum Schützen eines Kommunikationskanals nach Anspruch 13, umfassend eine Einrichtung zum Senden eines Freigabesignals (FREIGABE) von dem Vorbesetzungsplatz (A) zu dem Freilaufplatz (C), und eine Einrichtung zum Bewirken, dass zugelassen wird, dass der Freilaufplatz (C) eine Information in der zumindest einen Richtung weiterleitet.

15. Anordnung nach einem der Ansprüche 13 bis 14, wobei das Transportnetz ein Wellenlängenteilungs-Multiplexiernetz ist.

16. Anordnung nach einem der Ansprüche 13 bis 14, wobei das Transportnetz ein Teilungs-Multiplexier-Zugriffsnetz ist.

## Revendications

1. Procédé de protection d'un canal de communication dans un réseau de transport (RING ; TDM), réseau comprenant des sites de réseau (A, B, C, D ; E à N) configurés en une topologie en anneau par des liaisons bidirectionnelles, dans lequel un des sites, à savoir un site par défaut (A ; M) joue le rôle de sectionneur d'anneau en empêchant que les informations soient relayées dans au moins une direction, lequel procédé comprend les étapes suivantes :
- survenance d'une erreur (ERROR ; ERR1) dans le réseau à topologie en anneau (RING ; TDM) ;
- localisation d'un site de substitution (C ; I) qui est le premier à être empêché de recevoir des informations (INF) transportées par le réseau, à cause de l'erreur ;
- action sur le site de substitution (C ; I) pour l'amener à agir comme sectionneur d'anneau, en empêchant le site (C ; I) de relayer des informations dans ladite au moins une direction ;
- action sur le site par défaut (A ; M) afin de lui permettre de relayer les informations dans ladite au moins une direction ;
- réparation de l'erreur (ERROR ; ERR1) ;
le procédé étant **caractérisé par** l'étape suivante:
- action sur le site par défaut (A ; M) pour l'amener à agir comme sectionneur d'anneau en empêchant le site de relayer des informations dans ladite au moins une direction.

2. Procédé de protection d'un canal de communication selon la revendication 1, ledit procédé comprenant en outre l'étape suivante :
- exercice d'une influence sur le site de substitution (C) afin de lui permettre de relayer des informations dans ladite au moins une direction.

3. Procédé de protection d'un canal de communication selon la revendication 2, dans lequel l'exercice d'une influence sur le site de substitution (C) pour lui permettre de relayer est précédé de l'étape suivante :
- émission d'un signal de libération (RELEASE) par le site par défaut (A) vers le site de substitution (C).

4. Procédé de protection d'un canal de communication selon l'une quelconque des revendications 1 à 3, dans lequel le canal de communication dans le réseau de transport (RING) est un canal téléphonique de service intégré.

5. Procédé de protection d'un canal de communication selon l'une quelconque des revendications 1 à 4, le procédé comprenant en outre les étapes suivantes:
- envoyer un signal libre (IDLE) à partir du noeud par défaut A, indiquant au système qu'il constitue le noeud par défaut ;
- envoyer un signal de substitution (OVERRIDE) à partir du noeud de substitution C, indiquant au système qu'il constitue le noeud de substitution ;
- envoyer un signal de rétablissement (REVERT), indiquant au système que l'erreur a été réparée ;
- envoyer un signal libre (IDLE) à partir du noeud de substitution (C), indiquant au système qu'il est dans un état par défaut ;
- envoyer un signal libre (IDLE) à partir du noeud par défaut (A), indiquant au système qu'il est dans un état par défaut.

6. Procédé de protection d'un canal de communication selon l'une quelconque des revendications 1 à 5, dans lequel le réseau de transport est un réseau à multiplexage par répartition en longueur d'onde.

7. Procédé de protection d'un canal de communication selon l'une quelconque des revendications 1 à 5, dans lequel le réseau de transport est un réseau à multiplexage par répartition dans le temps.

8. Procédé de protection d'un canal de communication selon la revendication 1, le procédé comprenant en outre les étapes suivantes :
- avant la réparation de l'erreur (ERR1), survenance d'une erreur secondaire (ERR2) dans le réseau à topologie en anneau (TDM) ;
- localisation d'un site (F) qui est le premier à être empêché de recevoir des informations transportées par le réseau à cause de l'erreur secondaire (ERR2), le site étant appelé second site de substitution (F) ;
- action sur le second site de substitution (F) pour l'amener à agir comme second sectionneur d'anneau, en empêchant le site (F) de relayer des informations dans ladite au moins une direction ;
- après réparation de l'erreur (ERR1), exercice d'une influence sur le premier site de substitution (I) pour lui permettre de relayer des informations ;
- réparation de l'erreur secondaire (ERR2).

9. Procédé de protection d'un canal de communication selon la revendication 8, le procédé comprenant en outre l'étape suivante :
- exercice d'une influence sur le site de substitution (F) pour lui permettre de relayer des informations.

10. Procédé de protection d'un canal de communication selon la revendication 9, dans lequel l'exercice d'une influence sur le site de substitution (F) pour lui permettre de relayer est précédé de l'étape suivante:
- émission d'un signal de libération (RELEASE) par le site par défaut (M) vers le site de substitution (F).

11. Procédé de protection d'un canal de communication selon l'une quelconque des revendications 8 à 10, dans lequel le réseau de transport est un réseau à multiplexage par répartition en longueur d'onde.

12. Procédé de protection d'un canal de communication selon l'une quelconque des revendications 8 à 10, dans lequel le réseau de transport est un réseau à multiplexage par répartition dans le temps.

13. Agencement de protection d'un canal de communication dans un réseau de transport (RING), lequel réseau comprenant des sites de réseau (A, B, C, D) configurés en une topologie en anneau par des liaisons bidirectionnelles, dans lequel un des sites, à savoir un site par défaut (A), joue le rôle de sectionneur d'anneau en empêchant que les informations soient relayées dans au moins une direction, comprenant:
- un moyen de localisation d'un site, à savoir un site de substitution (C) qui est le premier à être empêché de recevoir des informations (INF) dans ladite une direction à cause de l'erreur ;
- un moyen d'action sur le site de substitution (C) pour l'amener à agir comme sectionneur d'anneau, en empêchant le site (C) de relayer des informations dans ladite au moins une direction ;
- un moyen d'action sur le site par défaut (A) afin de lui permettre de relayer les informations dans ladite au moins une direction ;
- un moyen d'enregistrement de la fin d'une erreur ;
et **caractérisé par** :
- un moyen d'action sur le site par défaut (A) pour l'amener à agir comme sectionneur d'anneau en empêchant le site de relayer des informations dans ladite au moins une direction.

14. Agencement de protection d'un canal de communication selon la revendication 13, comprenant un moyen d'émission d'un signal de libération (RELEASE) par le site par défaut (A) vers le site de substitution (C) et un moyen d'exercice d'une influence sur le site de substitution (C) afin de lui permettre de relayer des informations dans ladite au moins une direction.

15. Agencement de protection d'un canal de communication selon l'une quelconque des revendications 13 à 14, dans lequel le réseau de transport est un réseau à multiplexage par répartition en longueur d'onde.

16. Agencement de protection d'un canal de communication selon l'une quelconque des revendications 13 à 14, dans lequel le réseau de transport est un réseau à multiplexage par répartition dans le temps.
